# DEMANDE DE BREVET EUROPEEN

(11) **EP 3 173 924 A1**
(43) Date de publication de la demande: **31.05.2017**
(21) Numéro de dépôt: 16199845.5
(22) Date de dépôt: 21.11.2016
(51) Int. Cl.: G06F 3/16, G10L 15/26, G08G 5/00, H04M 1/725

(54) **PROCÉDÉ D'UTILISATION D'UN DISPOSITIF D'INTERFACE HOMME-MACHINE POUR AÉRONEF COMPORTANT UNE UNITÉ DE RECONNAISSANCE DE LA PAROLE**

(30) Priorité: 27.11.2015 FR 1502480
(71) Demandeur: Thales, 92400 Courbevoie (FR)
(72) Inventeur: MICHEL, François, 33187 Le Haillan Cedex (FR); LAFON, Stéphanie, 33187 Le Haillan Cedex (FR); BERNARD, Jean-Baptiste, 33187 Le Haillan Cedex (FR)
(74) Mandataire: Bréda, Jean-Marc

(57) **Abrégé**

Le domaine général de l'invention est celui des procédés d'utilisation d'un dispositif d'interface homme-machine pour aéronef comportant au moins une unité de reconnaissance de la parole (13), un dispositif de visualisation (10) à interface tactile (11), un calculateur d'interfaces graphiques (12) et une unité de calcul électronique (14), l'ensemble étant agencé pour présenter graphiquement une pluralité de commandes, chaque commande étant classée en au moins une première catégorie dite critique et une seconde catégorie dite non critique, chaque commande non critique ayant une pluralité d'options, chaque option ayant un nom, lesdits noms assemblés dans une base de données (140) appelée « lexique ». Le procédé selon l'invention comporte des étapes de reconnaissance des commandes affichées, d'activation de l'unité de reconnaissance de la parole, de comparaison entre les informations tactiles et vocales et une étape de validation.

## Description

Le domaine de l'invention est celui des interactions homme-machine dans le cockpit d'un aéronef et plus précisément celui des systèmes comportant un dispositif à commande vocale et un dispositif tactile.

Dans les cockpits modernes, les interactions entre le pilote et l'aéronef se font au moyen de différents interfaces homme-machine. Les principales passent par des interactions avec les dispositifs de visualisation de planche de bord qui affichent les principaux paramètres de pilotage et de navigation nécessaires au bon déroulement du plan de vol ou de l'exécution de la mission. On utilise, de plus en plus, à cet effet, des surfaces tactiles qui permettent des interactions simples avec les dispositifs de visualisation.

Pour simplifier encore les interactions du pilote avec le système de bord, il est possible d'utiliser la parole comme moyen d'interaction via un système de reconnaissance vocale.

La reconnaissance vocale a été étudiée de manière expérimentale dans le domaine avionique. Afin de garantir une reconnaissance compatible d'une utilisation en environnement aéronautique qui peut être bruité, des solutions basées sur un dictionnaire limité de commandes et sur un apprentissage préalable de l'utilisateur ont été mises en oeuvre. Par ailleurs, ces solutions nécessitent l'usage d'un alternat, par exemple, un bouton physique dans le cockpit, qui permet de déclencher et d'arrêter la reconnaissance vocale.

Il est également possible d'utiliser une surface tactile pour déclencher la reconnaissance vocale. Ainsi, la demande WO2010/144732 intitulée « Touch anywhere to speak » décrit un système pour dispositifs électroniques mobiles déclenchant la reconnaissance vocale par interaction tactile. Cette demande est silencieuse sur les aspects de sécurité propres au domaine aéronautique et ne propose pas de solutions pour améliorer la fiabilité de la reconnaissance vocale en environnement bruité.

Ainsi, les solutions actuelles nécessitent un alternat physique, l'apprentissage par le pilote de la liste des commandes disponibles par reconnaissance vocale et un système d'acquittement du résultat. De plus, les performances de la reconnaissance vocale limitent généralement son utilisation.

Le procédé d'utilisation d'un dispositif d'interface homme-machine pour aéronef comportant une unité de reconnaissance de la parole selon l'invention ne présente pas ces inconvénients. Il permet de :
- Limiter les interactions tactiles fastidieuses comme taper sur un clavier virtuel, génératrices d'erreurs ou d'inconforts particulièrement lors de turbulences atmosphériques ;
- Apporter un niveau de sécurité compatible avec les normes aéronautiques sur l'utilisation de la reconnaissance vocale ;
- Limiter l'apprentissage par le pilote du dictionnaire de commande vocale en plaçant la commande vocale dans un contexte précis et limité, diminuant ainsi de façon considérable les risques d'erreurs.

Il assure également, de façon simple, la gestion des commandes critiques et des commandes non critiques. On entend, par commande critique, une commande susceptible de mettre en danger la sécurité de l'appareil. Ainsi, la mise en route ou l'extinction des moteurs est une commande critique. On entend, par commande non critique, une commande n'ayant pas d'impact important sur la sécurité du vol ou de l'appareil. Ainsi, un changement de fréquence de radiocommunication n'est pas une commande critique.

Plus précisément, l'invention a pour objet un procédé d'utilisation d'un dispositif d'interface homme-machine pour aéronef comportant au moins une unité de reconnaissance de la parole, un dispositif de visualisation à interface tactile, un calculateur d'interfaces graphiques et une unité de calcul électronique, l'ensemble étant agencé pour présenter graphiquement une pluralité de commandes, chaque commande étant classée en au moins une première catégorie dite critique et une seconde catégorie dite non critique, chaque commande non critique ayant une pluralité d'options, chaque option ayant un nom, lesdits noms assemblés dans une base de données appelée « lexique », caractérisé en ce que,
- lorsque la commande est critique, le procédé d'utilisation comporte les étapes suivantes :
   o Reconnaissance de la commande critique activée par un utilisateur au moyen de l'interface tactile ;
   o Activation de l'unité de reconnaissance de la parole en fonction de ladite commande ;
   o Comparaison entre la parole décodée par l'unité de reconnaissance de la parole et la commande activée ;
   o Validation de la commande activée si la parole décodée correspond à la commande activée ;
- lorsque la commande est non critique, le procédé d'utilisation comporte les étapes suivantes :
   o Reconnaissance de la commande non critique activée par un utilisateur au moyen de l'interface tactile ;
   o Activation de l'unité de reconnaissance de la parole en fonction de ladite commande ;
   o Comparaison entre la parole décodée par l'unité de reconnaissance de la parole et les noms du lexique associé à la commande activée ;
   o Sélection du nom du lexique correspondant le mieux à la parole décodée ;
   o Affichage de l'option correspondant audit nom du lexique.

Avantageusement, lorsque la commande est non critique, l'option correspondant au nom du lexique est automatiquement mise en oeuvre.

Avantageusement, la fonction d'activation de l'unité de reconnaissance de la parole n'est active que pendant une durée limitée débutant à l'instant de la reconnaissance de la commande activée par un utilisateur au moyen de l'interface tactile.

Avantageusement, cette durée est proportionnelle à la taille du lexique.

Avantageusement, cette durée est inférieure ou égale à 10 secondes.

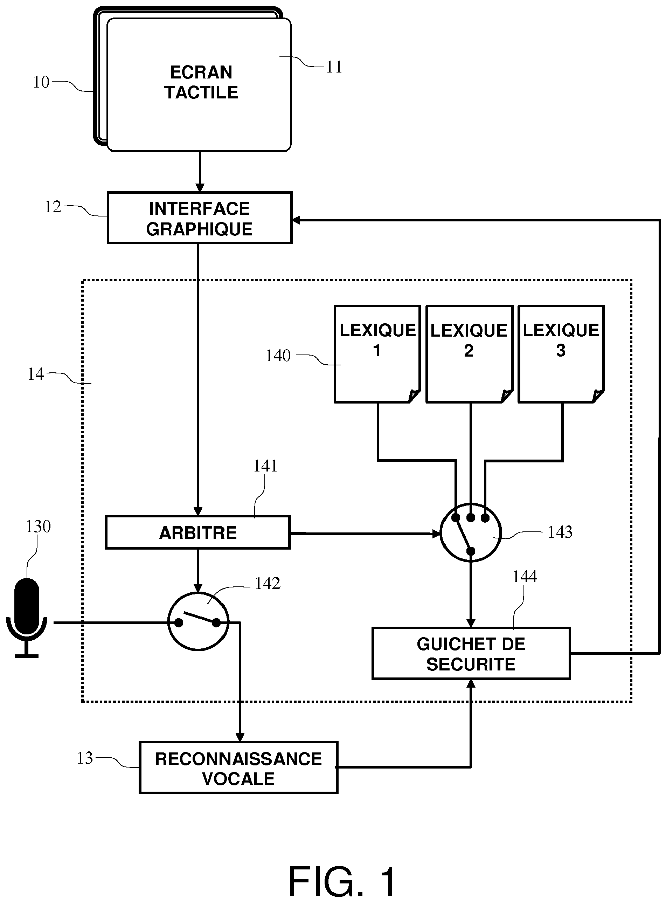

L'invention sera mieux comprise et d'autres avantages apparaîtront à la lecture de la description qui va suivre donnée à titre non limitatif et grâce à la figure 1 annexée qui représente le synoptique d'un dispositif d'interface homme-machine pour aéronef selon l'invention.

Le procédé selon l'invention est mis en oeuvre dans un dispositif d'interface homme-machine pour aéronef et, plus précisément, dans son unité de calcul électronique.

A titre d'exemple, l'ensemble des moyens du dispositif d'interface-homme 1 est représenté sur la figure 1. Il comporte au moins :
- un dispositif de visualisation 10 à interface tactile 11 ;
- un calculateur d'interfaces graphiques 12 ;
- une unité de reconnaissance de la parole 13 ;
- une unité de calcul électronique 14. Cette unité est entourée d'un trait pointillé sur la figure 1.

Le dispositif de visualisation 10 est classiquement un écran plat à cristaux liquides. D'autres techniques sont envisageables. Il présente des informations sur le pilotage ou la navigation ou le système avionique de l'appareil. L'interface tactile 11 se présente sous la forme d'une dalle tactile transparente disposée sur l'écran du dispositif de visualisation. Cette dalle tactile est semblable aux dalles tactiles mises en oeuvre sur les « tablettes » ou sur les « smartphones » destinés au grand public. Plusieurs solutions techniques, bien connues de l'homme du métier, permettent de réaliser ce type de dalle tactile.

L'interface graphique 12 est un calculateur qui, à partir de différentes données issues des capteurs ou des bases de données de l'aéronef élabore les informations graphiques envoyées au dispositif de visualisation. Ces informations comportent un certain nombre de commandes. Chaque commande a un certain nombre d'options possibles. Par exemple, la commande « fréquence d'émission » a un certain nombre d'options de fréquences possibles.

L'interface graphique 12 récupère également les informations issues de la dalle tactile qui sont transformées en instructions de commande ou de validation pour le reste du système avionique.

L'unité de reconnaissance de la parole 13 comporte classiquement un micro-récepteur 130 et des moyens de traitement de la parole permettant de reconnaître les mots prononcés par un utilisateur. Là encore, ces différents moyens sont connus de l'homme du métier. Cette unité est configurable dans le sens où on peut lui spécifier à tout moment les lexiques des commandes/mots à reconnaître.

L'unité de reconnaissance de la parole n'est active que pendant une durée limitée débutant à l'instant de la reconnaissance de la commande activée par un utilisateur au moyen de l'interface tactile. Le déclenchement et l'arrêt de la reconnaissance vocale est donc un mécanisme intelligent :
- Le déclenchement de la commande vocale se fait avec l'interaction tactile permettant un pilote de déterminer l'objet à modifier ;
- La durée de la reconnaissance est déterminée soit par la fin de la première interaction tactile, soit en fonction du lexique, dès qu'une reconnaissance conforme au lexique est détectée. Il existe également une durée limite qui dépend du lexique sélectionné et qui empêche la reconnaissance vocale de rester active indéfiniment si, par exemple, la fin de l'interaction tactile n'est pas détectée. La valeur de cette durée dépend du lexique sélectionné Cette durée est généralement inférieure ou égale à 10 secondes.

Pour les commandes non critiques, l'unité de calcul électronique 14 comporte un certain nombre de bases de données appelées « Lexique » 140. Chaque lexique comporte des mots ou des noms correspondant à une option de commande particulière. Ainsi, la commande « Fréquence » ne comporte que des noms d'indicatifs de fréquence ou des valeurs de fréquence. La figure 1 comporte, à titre d'exemple non limitatif, trois bases appelées « Lexique 1 », « Lexique 2 » et « Lexique 3 ».

L'unité de calcul électronique 14 assure les tâches spécifiques suivantes :
- « Arbitre » 141. Ce terme recouvre une double fonction.
   - La première fonction 142 consiste à activer/désactiver la reconnaissance vocale. Elle est symbolisée par un interrupteur tout ou rien sur la figure 1. Le but de cette fonction est de n'activer la reconnaissance vocale que lorsque l'utilisateur sélectionne une commande par l'intermédiaire de la dalle tactile, c'est-à-dire en temps utile.
   - La seconde fonction 143 consiste à spécifier le bon lexique de commandes ou de mots à reconnaître en fonction de la commande. En clair, le lexique sélectionné qui correspond au lexique 1 sur la figure 1 correspond aux options d'une commande unique. Cette fonction 143 est symbolisée par un interrupteur à choix multiples sur la figure 1 ;
- «Guichet de sécurité » 144. Cette fonction vérifie que le résultat de la commande vocale est bien conforme au lexique sélectionné par l'arbitre 141 et la transmet à l'interface graphique 12 si cette conformité est acquise. L'interface graphique affiche alors une demande de confirmation ou de validation auprès du pilote.

Comme il a été dit, il existe deux types de commande, dits critiques et non critiques.

Au titre de premier exemple, pour illustrer le fonctionnement de l'interface homme-machine selon l'invention dans le cas d'une commande critique, on suppose que le feu s'est déclaré sur le moteur gauche et que le pilote souhaite éteindre ce moteur.

En appuyant sur l'interface tactile sur un bouton virtuel affiché permettant l'arrêt du moteur gauche, le pilote doit prononcer simultanément « arrêt du moteur gauche » en continuant à appuyer sur le bouton d'arrêt du moteur gauche. L'action n'est validée par le système que si la phrase « arrêt du moteur gauche » est reconnue par l'unité de reconnaissance de la parole.

Au titre de second exemple, pour illustrer le fonctionnement de l'interface homme-machine selon l'invention dans le cas d'une commande non critique, on suppose que l'interface graphique affiche une fréquence radio et que le pilote souhaite modifier cette fréquence.

Sur un écran de visualisation du cockpit, la valeur courante de ladite fréquence radio pour les communications « VHF » est affichée. Un appui sur la dalle tactile par le pilote sur la position de la représentation de cette fréquence déclenche la reconnaissance vocale pendant une durée déterminée ainsi que la sélection du lexique permettant de reconnaître des fréquences radios. Ce lexique comporte, par exemple, un ensemble de valeurs particulières. Comme le pilote a désigné une fréquence, il peut prononcer naturellement une nouvelle valeur pour la fréquence, la reconnaissance vocale analyse selon le lexique restreint aux fréquences possibles. Si le mot reconnu fait partie du lexique, alors le guichet 144 propose une valeur textuelle qui est affichée à proximité de la valeur courante. Le pilote peut valider ou non la nouvelle valeur par une seconde interaction tactile. La validation peut également être automatique lorsque le nouveau choix n'a pas de conséquences graves.

Les avantages de cette interface homme-machine sont les suivants.

Le premier avantage est la sécurité du dispositif à la fois dans le cas de commandes critiques et de commandes non critiques. La sécurité est un point essentiel des interfaces destinées aux applications aéronautiques. Premièrement, la reconnaissance vocale est restreinte à un contexte particulier, la reconnaissance d'une fréquence dans l'exemple précédent, ce qui permet de garantir une sécurité plus élevée du dispositif que des dispositifs fonctionnant à l'aveugle. Par ailleurs, l'information tactile et la reconnaissance vocale sont redondantes. Enfin, dans la mesure où l'on limite le temps pendant lequel la reconnaissance vocale est active, on évite les reconnaissances intempestives et on peut vérifier le résultat de la commande vocale vis à vis des valeurs possibles.

Le second avantage est la plus grande capacité d'options du dispositif. La combinaison du tactile et de la reconnaissance vocale permet la reconnaissance d'un plus grand nombre de commandes tout en sécurisant l'usage de la reconnaissance vocale. En effet, au lieu d'un unique lexique de mots à reconnaître, la reconnaissance vocale est basée sur une pluralité de lexiques. Chacun de ces lexiques est de taille restreinte mais la somme de ces lexiques permet un grand nombre d'options de commandes.

Le troisième avantage est la grande ergonomie du dispositif. En effet, la désignation de l'objet à modifier permet au pilote de connaître naturellement la nature de la commande vocale à passer et diminue donc l'apprentissage nécessité par la commande vocale. De plus, la sélection du bon lexique, ainsi que la reconnaissance vocale sont naturellement déclenchés par une interaction tactile sur un élément de l'interface homme/machine du cockpit. Ce dispositif permet ainsi une interaction naturelle et efficiente entre le pilote et le système embarqué puisqu'on utilise le tactile pour désigner le paramètre à modifier et la voix pour donner la nouvelle valeur.

Le quatrième avantage est la suppression d'un « alternat » physique, c'est-à-dire d'un moyen de mise en route et d'arrêt de la reconnaissance vocale. Cet alternat est le plus souvent un bouton mécanique de commande. Dans le dispositif selon l'invention, la mise en route et l'arrêt se font de façon intelligente, uniquement lorsque la reconnaissance vocale doit être sollicitée.

## Revendications

1. Procédé d'utilisation d'un dispositif d'interface homme-machine pour aéronef comportant au moins une unité de reconnaissance de la parole (13), un dispositif de visualisation (10) à interface tactile (11), un calculateur d'interfaces graphiques (12) et une unité de calcul électronique (14), l'ensemble étant agencé pour présenter graphiquement une pluralité de commandes, chaque commande étant classée en au moins une première catégorie dite critique et une seconde catégorie dite non critique, chaque commande non critique ayant une pluralité d'options, chaque option ayant un nom, lesdits noms assemblés dans une base de données (140) appelée « lexique »,
**caractérisé en ce que**,
- lorsque la commande est critique, le procédé d'utilisation comporte les étapes suivantes :
o Reconnaissance de la commande critique activée par un utilisateur au moyen de l'interface tactile ;
o Activation de l'unité de reconnaissance de la parole en fonction de ladite commande ;
o Comparaison entre la parole décodée par l'unité de reconnaissance de la parole et la commande activée ;
o Validation de la commande activée si la parole décodée correspond à la commande activée ;
- lorsque la commande est non critique, le procédé d'utilisation comporte les étapes suivantes :
o Reconnaissance de la commande non critique activée par un utilisateur au moyen de l'interface tactile ;
o Activation de l'unité de reconnaissance de la parole en fonction de ladite commande ;
o Comparaison entre la parole décodée par l'unité de reconnaissance de la parole et les noms du lexique associé à la commande activée ;
o Sélection du nom du lexique correspondant le mieux à la parole décodée ;
o Affichage de l'option correspondant audit nom du lexique.

2. Procédé d'utilisation d'un dispositif d'interface homme-machine selon la revendication 1, **caractérisé en ce que**, lorsque la commande est non critique, l'option correspondant au nom du lexique est automatiquement mise en oeuvre.

3. Procédé d'utilisation d'un dispositif d'interface homme-machine selon la revendication 1, **caractérisé en ce que** la fonction d'activation de l'unité de reconnaissance de la parole n'est active que pendant une durée limitée débutant à l'instant de la reconnaissance de la commande activée par un utilisateur au moyen de l'interface tactile.

4. Procédé d'utilisation d'un dispositif d'interface homme-machine selon la revendication 3, **caractérisé en ce que** cette durée est proportionnelle à la taille du lexique.

5. Procédé d'utilisation d'un dispositif d'interface homme-machine selon l'une des revendications 3 ou 4, **caractérisé en ce que** cette durée est inférieure ou égale à 10 secondes.
